(19) Europäisches Patentamt / European Patent Office / Office européen des brevets

(11) **EP 4 224 594 A1**

(12) **EUROPEAN PATENT APPLICATION**
published in accordance with Art. 153(4) EPC

(43) Date of publication:
**09.08.2023 Bulletin 2023/32**

(21) Application number: **21874953.9**

(22) Date of filing: **18.08.2021**

(51) International Patent Classification (IPC):
$H01M\ 10/36\ ^{(2010.01)}$    $H01M\ 4/36\ ^{(2006.01)}$
$H01M\ 4/40\ ^{(2006.01)}$    $H01M\ 4/48\ ^{(2010.01)}$
$H01M\ 4/505\ ^{(2010.01)}$    $H01M\ 4/525\ ^{(2010.01)}$
$H01M\ 4/587\ ^{(2010.01)}$    $H01M\ 10/0565\ ^{(2010.01)}$
$H01M\ 50/489\ ^{(2021.01)}$

(52) Cooperative Patent Classification (CPC):
H01M 4/36; H01M 4/40; H01M 4/48; H01M 4/505;
H01M 4/525; H01M 4/587; H01M 10/0565;
H01M 10/36; H01M 50/489; Y02E 60/10

(86) International application number:
**PCT/JP2021/030129**

(87) International publication number:
**WO 2022/070650 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020165435**

(71) Applicant: **Panasonic Intellectual Property Management Co., Ltd.**
**Osaka-shi, Osaka 540-6207 (JP)**

(72) Inventors:
• **MATSUMOTO, Hiroyuki**
  **Osaka-shi, Osaka 540-6207 (JP)**
• **IIDA, Kazuhiro**
  **Osaka-shi, Osaka 540-6207 (JP)**
• **TAKEZAWA, Hideharu**
  **Osaka-shi, Osaka 540-6207 (JP)**

(74) Representative: **Novagraaf International SA**
**Chemin de l'Echo 3**
**1213 Onex, Geneva (CH)**

(54) **LITHIUM ION SECONDARY BATTERY**

(57)    This lithium ion secondary battery comprises a negative electrode, a positive electrode, a non-aqueous electrolyte including a lithium salt, and an aqueous electrolyte including a lithium salt, wherein: among the negative electrode and the positive electrode, the aqueous electrolyte contacts only the positive electrode; among the negative electrode and the positive electrode, the non-aqueous electrolyte contacts at least the negative electrode; the positive electrode contains a positive electrode active material; the positive electrode active material contains a lithium transition metal composite oxide and a surface modification layer formed on the surface of primary particles of the lithium transition metal composite oxide; and the surface modification layer contains an alkali earth metal element.

Figure 1

**Description**

TECHNICAL FIELD

The present disclosure relates to a lithium ion secondary battery.

BACKGROUND

As secondary batteries with a high output and a high energy density, lithium ion secondary batteries are widely used that include a positive electrode, a negative electrode, and an electrolyte liquid and perform charge and discharge by allowing lithium ions to travel between the positive electrode and the negative electrode. In the conventional secondary batteries, an organic solvent-based electrolyte liquid is used for achieving the high energy density.

However, organic solvents are generally flammable, and have an important problem of ensuring safety. In addition, organic solvents have a lower ion conductivity than aqueous solutions, and have a problem that the rapid charge-discharge characteristics are insufficient.

In view of such problems, a secondary battery has been studied in which an aqueous electrolyte containing water is used. For example, Patent Literature 1 proposes a lithium ion secondary battery in which an aqueous solution containing a high-concentration alkali salt is used as an aqueous liquid electrolyte. Patent Literature 2 proposes a lithium ion secondary battery including a negative electrode filled with a non-aqueous solid electrolyte, a positive electrode, a separator disposed between the negative electrode and the positive electrode and filled with a non-aqueous solid electrolyte, and an aqueous liquid electrolyte.

CITATION LIST

PATENT LITERATURE

Patent Literature 1: JP 6423453 B
Patent Literature 2: JP 2018-198131 A

SUMMARY

Conventional lithium ion secondary batteries including an aqueous electrolyte have a problem of capacity reduction associated with a charge-discharge cycle.

An aspect of the present disclosure is a lithium ion secondary battery including a negative electrode, a positive electrode, a non-aqueous electrolyte including a lithium salt, and an aqueous electrolyte including a lithium salt, and the aqueous electrolyte is in contact with only the positive electrode between the negative electrode and the positive electrode, the non-aqueous electrolyte is in contact with at least the negative electrode between the negative electrode and the positive electrode, the positive electrode includes a positive electrode active material, the positive electrode active material includes a lithium-transition metal composite oxide and a surface modification layer formed on a surface of a primary particle of the lithium-transition metal composite oxide, and the surface modification layer includes at least one element selected from the group consisting of alkaline earth metal elements, rare earth elements, and Group IIIb elements, Group IVb elements, and Group Vb elements in a periodic table.

According to the present disclosure, a lithium ion secondary battery can be provided in which capacity reduction associated with a charge-discharge cycle can be suppressed.

BRIEF DESCRIPTION OF DRAWINGS

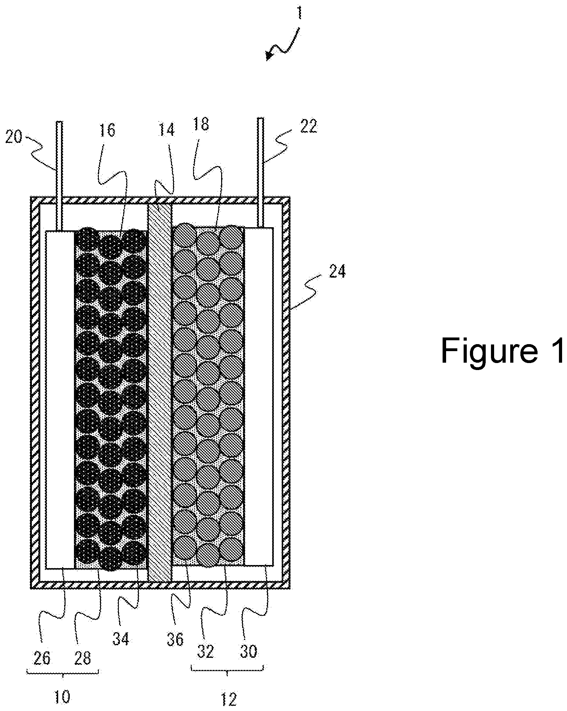

FIG. 1 is a schematic sectional view showing an example of a lithium ion secondary battery of the present embodiment.

DESCRIPTION OF EMBODIMENTS

A lithium ion secondary battery of an aspect of the present disclosure includes a negative electrode, a positive electrode, a non-aqueous electrolyte including a lithium salt, and an aqueous electrolyte including a lithium salt, the aqueous electrolyte is in contact with only the positive electrode between the negative electrode and the positive electrode, the non-aqueous electrolyte is in contact with at least the negative electrode between the negative electrode and the positive electrode, the positive electrode includes a positive electrode active material, the positive electrode active material includes a lithium-transition metal composite oxide and a surface modification layer formed on a surface of a primary particle of the lithium-transition metal composite oxide, and the surface modification layer includes at least one element selected from the group consisting of alkaline earth metal elements, rare earth elements, and Group IIIb elements, Group IVb elements, and Group Vb elements in a periodic table. Using the lithium ion secondary battery of an aspect of the present disclosure can suppress capacity reduction associated with a charge-discharge cycle. Although the mechanism of exerting the effect is not sufficiently clear, the following is presumed.

Bringing the aqueous electrolyte into contact with only the positive electrode suppresses a side reaction of water at the negative electrode and thus a charge-discharge reaction can proceed, but meanwhile, a side reaction between the positive electrode active material and protons occurs, and the capacity tends to decrease with a charge-discharge cycle. However, it is considered that if, as in the present disclosure, a positive electrode active material is used that includes a lithium-transition metal composite oxide including a primary particle having a surface on which a surface modification layer is disposed that includes at least one element selected from the group consisting of alkaline earth metal elements, rare earth elements, and Group IIIb elements, Group IVb elements, and Group Vb elements in a periodic table, a reaction with protons is suppressed on the surface of the positive electrode active material and thus capacity reduction associated with a charge-discharge cycle can be suppressed.

Hereinafter, an example of an embodiment of the lithium ion secondary battery according to the present disclosure will be described in detail.

FIG. 1 is a schematic sectional view showing an example of the lithium ion secondary battery of the present embodiment. A lithium ion secondary battery 1 shown in FIG. 1 includes a positive electrode 10, a negative electrode 12, a separator 14, an aqueous electrolyte 16, a non-aqueous electrolyte 18, a positive electrode lead 20, a negative electrode lead 22, and a battery case 24 housing these components.

The positive electrode 10 includes a positive electrode current collector 26 and a positive electrode mixture layer 28 disposed on the positive electrode current collector 26. The positive electrode lead 20 is connected to the positive electrode current collector 26. The positive electrode lead 20 is housed in the battery case 24 so that the tip of the positive electrode lead 20 protrudes to the outside of the battery case 24.

The negative electrode 12 includes a negative electrode current collector 30 and a negative electrode mixture layer 32 disposed on the negative electrode current collector 30. The negative electrode lead 22 is connected to the negative electrode current collector 30. The negative electrode lead 22 is housed in the battery case 24 so that the tip of the negative electrode lead 22 protrudes to the outside of the battery case 24.

For example, the positive electrode mixture layer 28 is impregnated with the aqueous electrolyte 16, and the aqueous electrolyte 16 is in contact with only the positive electrode 10 between the positive electrode 10 and the negative electrode 12. For example, the negative electrode mixture layer 32 is impregnated with the non-aqueous electrolyte 18, and the non-aqueous electrolyte 18 is in contact with the negative electrode 12. The non-aqueous electrolyte 18 may be in contact with only the negative electrode 12 between the positive electrode 10 and the negative electrode 12, or in contact with both the positive electrode 10 and the negative electrode 12. The separator 14 is disposed between the positive electrode 11 and the negative electrode 12. The separator 14 may be wound around the negative electrode 12.

As the positive electrode current collector 26 included in the positive electrode 10, for example, a foil of a metal electrochemically and chemically stable within the potential range of the positive electrode 10 or a film having such a metal disposed on its surface layer can be used. The form of the positive electrode current collector 26 is not particularly limited. For example, a porous body of the metal, such as a mesh, a punching sheet, or an expanded metal, may be used. Examples of a material of the positive electrode current collector 26 include stainless steel, Al, an aluminum alloy, and Ti. The positive electrode current collector 26 preferably has a thickness of, for example, greater than or equal to 3 $\mu$m and less than or equal to 50 $\mu$m from the viewpoints of current collectability, mechanical strength, and the like.

The positive electrode mixture layer 28 included in the positive electrode 10 includes a positive electrode active material 34. The positive electrode mixture layer 28 may include a binder, a conductive agent, and the like. The positive electrode 10 can be manufactured by, for example, applying a positive electrode mixture slurry including the positive electrode active material 34, a binder, a conductive agent, and the like to the positive electrode current collector 26, and drying and rolling the applied film to form a positive electrode mixture layer 28 on the positive electrode current collector 26.

The positive electrode active material 34 includes a lithium-transition metal composite oxide and a surface modification layer formed on the surface of a primary particle of the lithium-transition metal composite oxide and including at least one element selected from the group consisting of alkaline earth metal elements, rare earth elements, and Group IIIb elements, Group IVb elements, and Group Vb elements in the periodic table. The positive electrode active material 34 may include, in addition to the above components, a transition metal sulfide, a metal oxide, a lithium-containing polyanion-based compound containing one or more transition metals such as lithium iron phosphate ($LiFePO_4$) or lithium iron pyrophosphate ($Li_2FeP_2O_7$), a sulfur-based compound ($Li_2S$), oxygen, an oxygen-containing metal salt such as lithium oxide, and the like.

The lithium-transition metal composite oxide preferably contains at least one element of Ni, Co, Mn, or aluminum (Al), for example, from the viewpoints of charge-discharge efficiency and the like. Among these elements, at least a Ni element, at least a Co element, at least two elements of Ni and Mn, at least three elements of Ni, Co, and Mn, or at least three elements of Ni, Co, and Al are preferably contained. The lithium-transition metal composite oxide may contain an additional element other than these elements, and for example, may contain zirconium (Zr), boron (B), magnesium (Mg), scandium (Sc), yttrium (Y), titanium (Ti), iron (Fe), copper (Cu), zinc (Zn), chromium (Cr), lead (Pb), tin (Sn), sodium (Na), potassium (K), barium (Ba), strontium (Sr), calcium (Ca), tungsten (W), molybdenum (Mo), niobium (Nb), and silicon (Si).

Specific examples of the lithium-transition metal composite oxide include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (in each chemical formula, M is at least one of Na, Mg, Sc, Y, Mn, Fe, Co, Ni, Cu, Zn, Al, Cr, Pb, Sb, or B, $0 < x \leq 1.2$, $0 < y \leq 0.9$, and $2.0 \leq z \leq 2.3$). The lithium-transition metal composite oxides may be used singly or in combination of two or more kinds thereof. The lithium-transition metal composite oxide preferably contains greater than or equal to 80 mol% of Ni based on the total amount of the transition metals other than lithium from the viewpoint of increasing the capacity. From the viewpoint of stability of the crystal structure, the lithium-transition metal composite oxide is more preferably $Li_aNi_bCo_cAl_dO_2$ ($0 < a \leq 1.2$, $0.8 \leq b < 1$, $0 < c < 0.2$, $0 < d \leq 0.1$, and $b + c + d = 1$).

The lithium transition metal oxide may be a Li-rich transition metal oxide, a lithium transition metal halogen oxide, or the like. The Li-rich transition metal oxide is represented by, for example, the general formula $Li_{1+x}Me_{1-x}O_2$ ($0 < x$). The lithium transition metal halogen oxide is not particularly limited as long as it is a lithium transition metal oxide containing a halogen atom, but a lithium transition metal oxide containing a fluorine atom is preferably contained, for example, from the viewpoints of structural stability of the lithium transition metal oxide, and the like.

The lithium-transition metal composite oxide is, for example, a secondary particle including a plurality of primary particles that are aggregated. A primary particle included in the secondary particle has a particle size of, for example, greater than or equal to 0.05 μm and less than or equal to 1 μm. The particle size of the primary particle is measured, in a particle image observed with a scanning electron microscope (SEM), as the diameter of a circumscribed circle. The surface modification layer is present on the surface of the primary particle. In other words, the surface modification layer is present on the surface of a secondary particle of the lithium-transition metal composite oxide or at the interface in which primary particles are in contact with each other.

The lithium-transition metal composite oxide includes particles having a volume-based median diameter (D50) of, for example, greater than or equal to 3 μm and less than or equal to 30 μm, preferably greater than or equal to 5 μm and less than or equal to 25 μm, and particularly preferably greater than or equal to 7 μm and less than or equal to 15 μm. D50 means a particle size at which the cumulative frequency in the volume-based particle size distribution is 50% from the smallest particle size, and is also called a median diameter. The particle size distribution of the lithium-transition metal composite oxide can be measured using a laser diffraction-type particle size distribution measuring device (for example, MT3000II manufactured by MicrotracBEL Corp.) with water as a dispersion medium.

The surface modification layer formed on the surface of a primary particle of the lithium-transition metal composite oxide preferably has a thickness in the range of greater than or equal to 0.1 nm and less than or equal to 5 nm, for example, from the viewpoint of effectively suppressing a reaction with protons on the surface of the lithium-transition metal composite oxide.

The surface modification layer includes at least one element selected from the group consisting of alkaline earth metal elements, rare earth elements, and Group IIIb elements, Group IVb elements, and Group Vb elements in the periodic table (hereinafter, sometimes referred to as surface modification element). The alkaline earth metal elements are Be, Mg, Ca, Sr, Ba, and Ra. The rare earth elements are Sc, Y, La, Ce, and the like. The Group IIIb elements in the periodic table are B, Al, Ga, In, and Tl, the Group IVb elements are C, Si, Ge, Sn, and Pb, and the Group Vb elements are N, P, As, Sb, and Bi.

The surface modification layer may include, for example, a compound containing a surface modification element. The compound containing a surface modification element is, for example, in the form of an oxide, hydroxide, or carbonate. Among the alkaline earth metal elements, the rare earth elements, and the Group IIIb elements, the Group IVb elements, and the Group Vb elements in the periodic table, Sr and Ca are preferable, for example, from the viewpoint of effectively suppressing a reaction with protons on the surface of the lithium-transition metal composite oxide. That is, the surface modification layer preferably includes at least one element of Sr or Ca.

The content of the surface modification element based on the total number of moles of metal elements other than Li in the positive electrode active material 34 is preferably in the range of greater than or equal to 0.05 mol% and less than or equal to 20 mol%, for example, from the viewpoint of suppressing capacity reduction associated with a charge-discharge cycle. Here, the composition of the surface modification layer and the composition of the lithium-transition metal composite oxide in the positive electrode active material 34 can be measured by analyzing the portions of the surface modification layer and the lithium-transition metal composite oxide in a section of a primary particle in the positive electrode active material 34 using TEM-EDX.

The surface modification layer may further include a transition metal element. The transition metal element is preferably, for example, a transition metal element other than Ni and Co. A transition metal element other than Ni and Co tends to have a higher effect of suppressing a reaction with protons than Ni and Co.

The method of manufacturing the positive electrode active material 34 includes, for example, a first step of obtaining a transition metal oxide including a transition metal element such as Ni or Co, a second step of mixing the transition metal oxide obtained in the first step, a lithium compound, and a compound containing a surface modification element to obtain a mixture, and a third step of firing the mixture.

In the first step, for example, while a solution of a metal salt including Ni, Co, or the like is stirred, an alkaline solution such as sodium hydroxide is added dropwise to adjust the pH to the alkali side (for example, greater than or equal to 8.5 and less than or equal to 12.5), and thus a transition metal hydroxide including a transition metal element such as Ni or Co is precipitated (coprecipitated). Subsequently, the transition metal hydroxide is fired to obtain a transition metal oxide. The firing temperature is not particularly limited, but is, for example, greater than or equal to 300°C and less than or equal to 600°C.

In the second step, a mixture is obtained in which the transition metal oxide obtained in the first step, a lithium compound, and a compound containing a surface modification element are mixed. Examples of the lithium compound include $Li_2CO_3$, $LiOH$, $Li_2O_2$, $Li_2O$, $LiNO_3$, $LiNO_2$, $Li_2SO_4$, $LiOH \cdot H_2O$, $LiH$, and $LiF$. Examples of the compound containing a surface modification element include oxides, hydroxides, carbonates, sulfates, and nitrates of surface modification elements. The mixing ratio of the transition metal oxide obtained in the first step and the lithium compound is, for example, preferably adjusted so that the molar ratio of metal elements other than Li : Li is in the range of greater than or equal to 1 : 0.98 and less than or equal to 1 : 1.1.

In the third step, the mixture obtained in the second step is fired at a predetermined temperature for a predetermined time to obtain a positive electrode active material 34 including a lithium-transition metal composite oxide and a surface modification layer. As the third step, for example, a multi-stage firing step is preferably employed that includes a first firing step of firing the mixture under an oxygen stream to a first set temperature of greater than or equal to 450°C and less than or equal to 680°C at a first temperature rise rate, and a second firing step of firing the fired product obtained in the first firing step under an oxygen stream to a second set temperature of more than 680°C and less than or equal to 800°C at a second temperature rise rate. The firing is performed, for example, in an oxygen stream having an oxygen concentration of greater than or equal to 60%, and the flow rate of the oxygen stream is set to greater than or equal to 0.2 mL/min and less than or equal to 4 mL/min with respect to 10 $cm^3$ of a firing furnace and set to greater than or equal to 0.3 L/min with respect to 1 kg of the mixture.

Here, for example, one or more patterns of the first temperature rise rate are set in the range of greater than or equal to 1.5°C/min and less than or equal to 5.5°C/min, and one or more patterns of the second temperature rise rate that is slower than the first temperature rise rate are set in the range of greater than or equal to 0.1°C/min and less than or equal to 3.5°C/min.

The holding time of the first set temperature in the first firing step is preferably less than or equal to 5 hours, and more preferably less than or equal to 3 hours. The holding time of the first set temperature is a time during which the first set temperature is maintained after the first set temperature is reached. The holding time of the second set temperature in the second firing step is preferably greater than or equal to 1 hour and less than or equal to 10 hours, and more preferably greater than or equal to 1 hour and less than or equal to 5 hours. The holding time of the second set temperature is a time during which the second set temperature is maintained after the second set temperature is reached.

As the conductive agent included in the positive electrode mixture layer 28, a known conductive agent can be used that enhances the electroconductivity of the positive electrode mixture layer 28, and examples of the conductive agent include carbon materials such as carbon black, acetylene black, Ketjenblack, graphite, carbon nanofibers, carbon nanotubes, and graphene. As the binder included in the positive electrode mixture layer 28, a known binder can be used that maintains good contact states of the positive electrode active material 34 and the conductive agent and enhances the adhesiveness of the positive electrode active material 34 and the like to the surface of the positive electrode current collector 26, and examples of the binder include fluororesins such as polytetrafluoroethylene (PTFE) and polyvinylidene fluoride (PVDF), polyacrylonitrile (PAN), polyimides, acrylic resins, polyolefins, carboxymethyl celluloses (CMCs) and salts thereof, styrene-butadiene rubber (SBR), polyethylene oxide (PEO), polyvinyl alcohol (PVA), and polyvinylpyrrolidone (PVP).

As the negative electrode current collector 30 included in the negative electrode 12, for example, a foil of a metal electrochemically and chemically stable within the potential range of the negative electrode 12 or a film having such a metal disposed on its surface layer can be used. The form of the negative electrode current collector 30 is not particularly limited. For example, a porous body of the metal, such as a mesh, a punching sheet, or an expanded metal, may be used. Examples of a material of the negative electrode current collector 30 include Al, Ti, Mg, Zn, Pb, Sn, Zr, and In. These metals may be used singly, or may be used as an alloy or the like of two or more kinds thereof, and the material of the negative electrode current collector 30 is to include at least one such metal as a main component. In the case of including two or more elements, the material is not necessarily required to be alloyed. The negative electrode current collector 30 preferably has a thickness of, for example, greater than or equal to 3 $\mu$m and less than or equal to 50 $\mu$m from the viewpoints of current collectability, mechanical strength, and the like.

The negative electrode mixture layer 32 included in the negative electrode 12 includes a negative electrode active material 36. The negative electrode mixture layer 32 may include a binder, a conductive agent, and the like. As the conductive agent and the binder, ones similar to those on the positive electrode 10 side can be used. The negative electrode 12 can be manufactured by, for example, applying a negative electrode mixture slurry including the negative electrode active material 36, a binder, a conductive agent, and the like to the negative electrode current collector 30, and drying and rolling the applied film to form a negative electrode mixture layer 32 on the negative electrode current collector 30.

The negative electrode active material 36 is not particularly limited as long as it is a material that can be used as a negative electrode active material of a conventional lithium ion secondary battery, and examples of the material include carbon materials such as artificial graphite, natural graphite, hard carbon, soft carbon, carbon nanotubes, and activated carbon, metals such as Li, Si, and Sn, alloys of such metals, and metal compounds of such metals, such as metal oxides, metal sulfides, and metal nitrides. Examples of the alloys include Li-containing alloys such as a lithium-aluminum alloy, a lithium-tin alloy, a lithium-lead alloy, and a lithium-silicon alloy. Examples of the metal oxides include lithium titanates ($Li_4Ti_5O_{12}$ and the like), cobalt oxides, and iron oxides. Examples of the metal nitrides include lithium-containing nitrides such as lithium-cobalt nitrides, lithium-iron nitrides, and lithium-manganese nitrides. Sulfur-based compounds may also be exemplified. Among these materials, a carbon material is preferably included in the negative electrode active material 36, for example, from the viewpoint of improving the energy density of the battery, and a Li-containing alloy or a metal oxide is preferably included in the negative electrode active material 36, for example, from the viewpoint of improving the capacity of the battery. That is, the negative electrode active material 36 preferably includes at least one of a carbon material, a Li-containing alloy, or a metal oxide.

The aqueous electrolyte 16 including a lithium salt is, for example, an aqueous liquid electrolyte including a lithium salt and an aqueous solvent, or an aqueous solid electrolyte in which a lithium salt, an aqueous solvent, and a matrix polymer are combined. The aqueous solid electrolyte is obtained by, for example, dissolving a lithium salt in an aqueous solvent, further mixing or dissolving a matrix polymer to obtain a precursor solution, and drying the precursor solution. The aqueous electrolyte 16 is preferably an aqueous liquid electrolyte, for example, from the viewpoint of improving the battery characteristics.

The aqueous solvent is a solvent containing water, and may be water alone, or may contain water and a solvent other than water. The content of water based on the total amount of the aqueous solvent is preferably greater than or equal to 50% in terms of volume ratio, for example, from the viewpoints of enhancing the safety of the lithium ion secondary battery 1, and the like.

The amount of water with respect to the lithium salt included in the aqueous electrolyte 16 is such that the molar ratio of the lithium salt to water is preferably less than or equal to 1 : 4, more preferably in the range of greater than or equal to 1 : 0.5 and less than or equal to 1 : 4, and still more preferably in the range of greater than or equal to 1 : 0.5 and less than or equal to 1 : 3 mol. In a case where the amount of water with respect to the lithium salt included in the aqueous electrolyte 16 is within the above range, for example, the potential window of the aqueous electrolyte 16 may be enlarged as compared with the case of the water amount out of the above range, and thus the voltage applied to the lithium ion secondary battery 1 may be further increased.

Examples of the solvent other than water contained in the aqueous solvent include organic solvents such as esters, ethers, nitriles, alcohols, ketones, amines, amides, sulfur compounds, and hydrocarbons. Examples of the solvent other than water may further include halogen-substituted solvents in which at least a part of hydrogen atoms in the above-described solvents are substituted with halogen atoms such as fluorine. Specifically, from the viewpoint of, for example, improving the battery characteristics of the lithium ion secondary battery 1, the solvent other than water is preferably, for example, a cyclic carbonic acid ester such as ethylene carbonate, propylene carbonate, vinylidene carbonate, or butylene carbonate, a chain carbonic acid ester such as dimethyl carbonate, methyl ethyl carbonate, or diethyl carbonate, or a fluorinated carbonic acid ester including fluorine as a constitution element such as fluoroethylene carbonate, fluorodimethyl carbonate, or methyl fluoropropionate. Among the above examples, the cyclic carbonic acid ester and the fluorinated carbonic acid ester including fluorine as a constitution element are particularly preferable, for example, from the viewpoints of suppressing self-discharge of the battery, and the like. Among the fluorinated carbonic acid esters in the above examples, fluoroethylene carbonate is preferable. These organic solvents may be used singly or in combination of two or more kinds thereof.

The amount of the organic solvent with respect to the lithium salt included in the aqueous electrolyte 16 is such that the molar ratio of the lithium salt to the organic solvent is preferably in the range of greater than or equal to 1 : 0 and less than or equal to 1 : 2.5, and more preferably in the range of greater than or equal to 1 : 0 and less than or equal to 1 : 2. In a case where the amount of the organic solvent with respect to the lithium salt is within the above range, the battery characteristics of the lithium ion secondary battery may be improved as compared with the case of the organic solvent amount out of the above range.

As the lithium salt, any compound can be used as long as it can be dissolved and dissociated in an aqueous solvent to provide lithium ions in the aqueous electrolyte 16. Examples of such a lithium salt include salts with an inorganic acid such as perchloric acid, sulfuric acid, or nitric acid, salts with a halide ion such as a chloride ion or a bromide ion, and salts with an organic anion including a carbon atom in its structure.

Examples of the organic anion constituting the lithium salt include anions represented by the following general formulas (i) to (vi).

$$(R^1SO_2)(R^2SO_2)N^- \qquad (i)$$

($R^1$ and $R^2$ are each independently selected from an alkyl group or a halogen-substituted alkyl group. $R^1$ and $R^2$ may be bonded to each other to form a ring.)

$$R^3SO_3^- \qquad (ii)$$

($R^3$ is selected from an alkyl group or a halogen-substituted alkyl group.)

$$R^4CO_2^- \qquad (iii)$$

($R^4$ is selected from an alkyl group or a halogen-substituted alkyl group.)

$$(R^5SO_2)_3C^- \qquad (iv)$$

($R^5$ is selected from an alkyl group or a halogen-substituted alkyl group.)

$$[(R^6SO_2)N(SO_2)N(R^7SO_2)]^{2-} \qquad (v)$$

($R^6$ and $R^7$ are selected from an alkyl group or a halogen-substituted alkyl group.)

$$[(R^8SO_2)N(CO)N(R^9SO_2)]^{2-} \qquad (vi)$$

($R^8$ and $R^9$ are selected from an alkyl group or a halogen-substituted alkyl group.)

In the general formulas (i) to (vi), the number of carbon atoms in the alkyl group or the halogen-substituted alkyl group is preferably 1 to 6, more preferably 1 to 3, and still more preferably 1 to 2. The halogen in the halogen-substituted alkyl group is preferably fluorine. The substitution number of the halogen in the halogen-substituted alkyl group is equal to or smaller than the number of hydrogen atoms in the original alkyl group.

Each of $R^1$ to $R^9$ is, for example, a group represented by the following general formula (vii).

$$C_nH_aF_bCl_cBr_dI_e \qquad (vii)$$

(n is an integer of 1 or more, a, b, c, d, and e are integers of 0 or more, and $2n + 1 = a + b + c + d + e$ is satisfied.)

Specific examples of the organic anion represented by the general formula (i) include bis(trifluoromethanesulfonyl)imide (TFSI; $[N(CF_3SO_2)_2]^-$), bis(perfluoroethanesulfonyl)imide (BETI; $[N(C_2F_5SO_2)_2]^-$), and (perfluoroethanesulfonyl)(trifluoromethanesulfonyl)imide ($[N(C_2F_5SO_2)(CF_3SO_2)]^-$). Specific examples of the organic anion represented by the general formula (ii) include $CF_3SO_3^-$ and $C_2F_5SO_3^-$. Specific examples of the organic anion represented by the general formula (iii) include $CF_3CO_2^-$ and $C_2F_5CO_2^-$. Specific examples of the organic anion represented by the general formula (iv) include tris(trifluoromethanesulfonyl)carbon acid ($[(CF_3SO_2)_3C]^-$) and tris(perfluoroethanesulfonyl)carbon acid ($[(C_2F_5SO_2)_3C]^-$). Specific examples of the organic anion represented by the general formula (v) include sulfonyl bis(trifluoromethanesulfonyl)imide ($[(CF_3SO_2)N(SO_2)N(CF_3SO_2)]^{2-}$), sulfonyl bis(perfluoroethanesulfonyl)imide ($[(C_2F_5SO_2)N(SO_2)N(C_2F_5SO_2)]^{2-}$), and sulfonyl (perfluoroethanesulfonyl)(trifluoromethanesulfonyl)imide ($[(C_2F_5SO_2)N(SO_2)N(CF_3SO_2)]^{2-}$). Specific examples of the organic anion represented by the general formula (vi) include carbonyl bis(trifluoromethanesulfonyl)imide ($[(CF_3SO_2)N(CO)N(CF_3SO_2)]^{2-}$), carbonyl bis(perfluoroethanesulfonyl)imide ($[(C_2F_5SO_2)N(CO)N(C_2F_5SO_2)]^{2-}$), and carbonyl (perfluoroethanesulfonyl)(trifluoromethanesulfonyl)imide ($[(C_2F_5SO_2)N(CO)N(CF_3SO_2)]^{2-}$).

Examples of organic anions other than the organic anions of the general formulas (i) to (vi) include anions such as bis(1,2-benzenediolate(2-)-O,O')borate, bis(2,3-naphthalenediolate(2-)-O,O')borate, bis(2,2'-biphenyldiolate(2-)-O,O')borate, and bis(5-fluoro-2-ol ate-1-b enzene sulfonate-O, O')b orate.

The anion constituting the lithium salt is preferably an imide anion. Specific examples of a preferable imide anion include, in addition to the imide anions exemplified as the organic anions represented by the general formula (i), bis(fluorosulfonyl)imide (FSI; $[N(FSO_2)_2]^-$) and (fluorosulfonyl)(trifluoromethanesulfonyl)imide (FTI; $[N(FSO_2)(CF_3SO_2)]^-$).

The lithium salt having a lithium ion and an imide anion is, for example, preferably lithium bis(trifluoromethanesulfonyl)imide (LiTFSI), lithium bis(perfluoroethanesulfonyl)imide (LiBETI), lithium (perfluoroethanesulfonyl)(trifluoromethanesulfonyl)imide, lithium bis(fluorosulfonyl)imide (LiFSI), or lithium (fluorosulfonyl)(trifluoromethanesulfonyl)imide (LiFTI), and more preferably lithium bis(trifluoromethanesulfonyl)imide (LiTFSI), from the viewpoint of, for example, effectively suppressing self-discharge of the battery. These lithium salts may be used singly or in combination of two or more kinds thereof.

Specific examples of other lithium salts include $CF_3SO_3Li$, $C_2F_5SO_3Li$, $CF_3CO_2Li$, $C_2F_5CO_2Li$, $(CF_3SO_2)_3CLi$, $(C_2F_5SO_2)_3CLi$, $(C_2F_5SO_2)_2(CF_3SO_2)CLi$, $(C_2F_5SO_2)(CF_3SO_2)_2CLi$, $[(CF_3SO_2)N(SO_2)N(CF_3SO_2)]Li_2$, $[(C_2F_5SO_2)N(SO_2)N(C_2F_5SO_2)]Li_2$, $[(C_2F_5SO_2)N(SO_2)N(CF_3SO_2)]Li_2$, $[(CF_3SO_2)N(CO)N(CF_3SO_2)]Li_2$, $[(C_2F_5SO_2)N(CO)N(C_2F_5SO_2)]Li_2$, $[(C_2F_5SO_2)N(CO)N(CF_3SO_2)]Li_2$, lithium bis(1,2-benzenediolate(2-)-O,O')borate, lithium bis(2,3-naphthalenediolate(2-)-O,O')borate, lithium bis(2,2'-biphenyldiolate(2-)-O,O')borate, lithium bis(5-fluoro-2-olate-1-benzenesulfonate-O,O')borate, lithium perchlorate ($LiClO_4$), lithium chloride (LiCl), lithium bromide (LiBr), lithium hydroxide (LiOH), lithium nitrate ($LiNO_3$), lithium sulfate ($Li_2SO_4$), lithium sulfide ($Li_2S$), and lithium hydroxide (LiOH). These may be used singly or in combination of two or more kinds thereof.

The lithium salt included in the aqueous electrolyte 16 preferably contains a lithium ion and an imide anion, and the concentration of the lithium salt in the aqueous electrolyte is preferably greater than or equal to 4.5 mol/L and less than or equal to 6 mol/L, for example, from the viewpoint of improving the battery characteristics of the lithium ion secondary battery.

Examples of the matrix polymer included in a case where the aqueous electrolyte 16 is an aqueous solid electrolyte include polyvinylidene fluoride-hexafluoropropylene (PVDF-HFP), polyacrylonitrile (PAN), polyvinyl alcohol (PVA), polytetrafluoroethylene (PTFE), polyethylene oxide (PEO), and polymethyl methacrylate (PMMA). Examples of the matrix polymer may further include polymers obtained by mixing acrylonitrile and acrylic acid as monomers and thermally polymerizing the mixture.

The content of the matrix polymer is, for example, preferably greater than or equal to 1 mass% and less than or equal to 15.0 mass%, and more preferably greater than or equal to 3 mass% and less than or equal to 10 mass% based on the total amount of the aqueous electrolyte 16. Within the above range, for example, the aqueous electrolyte 16 easily gels or solidifies.

In a case where the aqueous electrolyte 16 is an aqueous solid electrolyte, the aqueous electrolyte 16 may coat the entire positive electrode 10, or may coat at least the positive electrode mixture layer 28. The aqueous solid electrolyte is obtained by, for example, dissolving a lithium salt in an aqueous solvent, further mixing or dissolving a matrix polymer to obtain a precursor solution, applying the precursor solution to the positive electrode 10 or immersing the positive electrode 10 in the precursor solution to coat the positive electrode 10 with the precursor solution, and then drying the resulting product. In a case where the aqueous electrolyte 16 is an aqueous liquid electrolyte, the entire positive electrode 10 may be immersed in the aqueous liquid electrolyte, but it is sufficient that only the positive electrode mixture layer 28 is impregnated with the aqueous liquid electrolyte.

The non-aqueous electrolyte 18 including a lithium salt is a non-aqueous liquid electrolyte including a lithium salt and an organic solvent, or a non-aqueous solid electrolyte in which a lithium salt, an organic solvent, and a matrix polymer are combined. The non-aqueous solid electrolyte is prepared by, for example, dissolving a lithium salt in an organic solvent, further mixing or dissolving a matrix polymer to obtain a precursor solution, and heating and drying the precursor solution. The non-aqueous electrolyte 18 is preferably a non-aqueous liquid electrolyte, for example, from the viewpoint of improving the battery characteristics.

Examples of the organic solvent include known organic solvents used in conventional non-aqueous secondary batteries, such as esters, ethers, nitriles, alcohols, ketones, amines, amides, sulfur compounds, and hydrocarbons described above. Among these organic solvents, esters, ethers, nitriles, amides, mixed solvents of two or more thereof, and the like are preferably used from the viewpoint of, for example, improving battery characteristics.

Examples of the esters include cyclic carbonic acid esters such as ethylene carbonate, propylene carbonate, and butylene carbonate, chain carbonic acid esters such as dimethyl carbonate, methyl ethyl carbonate, diethyl carbonate, methyl propyl carbonate, ethyl propyl carbonate, and methyl isopropyl carbonate, and carboxylic acid esters such as methyl acetate, ethyl acetate, propyl acetate, methyl propionate, ethyl propionate, and γ-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl.

The organic solvent preferably contains a halogen-substituted solvent in which hydrogen in the solvent described above is substituted with a halogen atom such as fluorine. The halogen-substituted solvent is particularly preferably at least one of a fluorinated cyclic carbonic acid ester, a fluorinated chain carbonic acid ester, or a fluorinated ether. Preferred examples of the fluorinated cyclic carbonic acid ester include 4-fluoroethylene carbonate, 4,5-difluoroethylene carbonate, 4,4-difluoroethylene carbonate, 4,4,5-trifluoroethylene carbonate, and 4,4,5,5-tetrafluoroethylene carbonate. Preferred examples of the fluorinated chain carbonic acid ester include ethyl 2,2,2-trifluoroacetate, methyl 3,3,3-trifluoropropionate, and methyl pentafluoropropionate. Preferred examples of the fluorinated ether include 1,1,2,2-tetrafluoroethyl 2,2,2-trifluoroethyl ether and 1,1,2,2-tetrafluoroethyl 2,2,3,3-tetrafluoropropyl ether.

The organic solvent preferably contains a cyclic organic solvent such as a cyclic carbonic acid ester, and more preferably contains greater than or equal to 10 vol% of a cyclic organic solvent with respect to the total volume of the organic solvent, for example, from the viewpoints of suppressing deterioration of the lithium ion conductivity of the non-aqueous electrolyte 18, and the like. In the case of including a matrix polymer, the organic solvent more preferably contains greater than or equal to 80 vol% of a cyclic organic solvent with respect to the total volume of the organic solvent.

Examples of the lithium salt include known lithium salts used in conventional non-aqueous secondary batteries, such as $LiPF_6$, $LiBF_4$, $LiAsF_6$, $LiClO_4$, $LiCF_3SO_3$, $LiN(FSO_2)_2$, $LiN(ClF_{2l+i}SO_2)(C_mF_{2m+1}SO_2)$ (l and m are integers of 1 or more), $LiC(C_pF_{2p+1}SO_2)(C_qF_{2q+1}SO_2)(C_rF_{2r+1}SO_2)$ (p, q, and r are integers of 1 or more), $Li[B(C_2O_4)_2]$ (lithium bis(oxalate)borate (LiBOB)), $Li[B(C_2O_4)F_2]$, $Li[P(C_2O_4)F_4]$, $Li[P(C_2O_4)_2F_2]$, and $LiPO_2F_2$. The lithium salt may be, for example, the above-exemplified lithium salt to be used in the aqueous electrolyte 16.

As the matrix polymer, ones similar to those in the aqueous electrolyte 16 can be used. The content of the matrix polymer is, for example, preferably greater than or equal to 1 mass% and less than or equal to 15.0 mass%, and more preferably greater than or equal to 3 mass% and less than or equal to 10 mass% based on the total amount of the non-aqueous electrolyte 18. Within the above range, for example, the non-aqueous electrolyte 18 easily solidifies.

The non-aqueous electrolyte 18 preferably has water repellency so as to have a solubility of less than or equal to 2 g in 100 g of water at 25°C, for example, from the viewpoints of effectively suppressing contact between the negative electrode 12 and water, and the like. The water repellency of the non-aqueous electrolyte 18 can be enhanced by, for example, increasing the ratio of the organic solvent having a water-repellent substituent or the fluorinated organic solvent.

In a case where the non-aqueous electrolyte 18 is a non-aqueous solid electrolyte, it is sufficient that only the surface of the negative electrode mixture layer 32 is coated with the non-aqueous electrolyte 18. However, a side reaction of water occurs also on the negative electrode current collector 30 and the negative electrode lead 22, and therefore it is preferable that the entire negative electrode 12 be coated, and it is more preferable that the negative electrode lead 22 (excluding the portion protruding from the battery case 24) be also coated. The non-aqueous solid electrolyte is obtained by, for example, dissolving a lithium salt in an organic solvent, further mixing or dissolving a matrix polymer to obtain a precursor solution, applying the precursor solution to the negative electrode 12 or immersing the negative electrode 12 to which the negative electrode lead 22 is attached in the precursor solution to coat the negative electrode 12 and the like with the precursor solution, and then drying the resulting product. In a case where the non-aqueous electrolyte 18 is a non-aqueous liquid electrolyte, it is sufficient that only the negative electrode mixture layer 32 is impregnated with the non-aqueous liquid electrolyte, but it is more preferable that the entire negative electrode 12 be immersed in the non-aqueous liquid electrolyte.

The separator 14 is not particularly limited as long as it has functions of lithium-ion permeation and electrical separation between the positive electrode 10 and the negative electrode 12, and for example, a solid electrolyte having lithium ion conductivity or a porous sheet including a resin, an inorganic material, and the like is used. Specific examples of the solid electrolyte include solid electrolytes having high water resistance such as LATP, and specific examples of the porous sheet include microporous thin films, woven fabrics, and nonwoven fabrics. Examples of a material of the separator 14 include olefin-based resins such as polyethylene and polypropylene, polyamides, polyamideimides, and cellulose. Examples of an inorganic material included in the separator 14 include glass and ceramics such as borosilicate glass, silica, alumina, and titania. The separator 14 may be a stacked body having a cellulose fiber layer and a thermoplastic resin fiber layer such as an olefin-based resin. The separator may be a multilayer separator including a polyethylene layer and a polypropylene layer, and a separator may be used that has a surface to which a material such as an aramid-based resin or a ceramic is applied.

The separator 14 is preferably coated with a water-repellent non-aqueous solid electrolyte from the viewpoint of effectively preventing water from moving toward the negative electrode 12 and causing a side reaction at the negative electrode 12. The water-repellent non-aqueous solid electrolyte coating the separator 14 may be one similar to those described for the non-aqueous electrolyte 18.

Examples of the battery case 24 include metal cases, resin cases, and laminate film cases. Examples of a material of the metal cases include nickel, iron, and stainless steel. Examples of a material of the resin cases include polyethylene and polypropylene. The laminate film is, for example, a multilayer film in which a stainless steel foil is coated with a resin film. Examples of a material of the resin film include polypropylene, polyethylene, nylon, and polyethylene terephthalate.

The lithium ion secondary battery of the present embodiment is used in various forms having a shape such as a square, cylindrical, flat, thin, coin, or laminate shape.

<Examples>

Hereinafter, the present disclosure will be further described with reference to Examples, but the present disclosure is not limited to these Examples.

<Example 1>

[Negative Electrode]

Graphite as a negative electrode active material and PVDF as a binder were mixed at a solid-content mass ratio of 96 : 4 in N-methyl-2-pyrrolidone (NMP) to prepare a negative electrode mixture slurry. Next, the negative electrode mixture slurry was applied to a negative electrode current collector made of a copper foil, and the applied film was dried and then rolled with a roller. The resulting product was cut into a predetermined electrode size to obtain a negative electrode. The amount of the applied negative electrode mixture slurry was 22.6 $gm^{-2}$, and the packing density of the negative electrode mixture layer was 1.0 $gcm^{-3}$.

[Positive Electrode]

A metal composite oxide represented by the general formula $Ni_{0.90}Co_{0.05}Al_{0.05}O_2$ and strontium hydroxide $(Sr(OH)_2)$ were mixed so that the content of Ca was 0.1 mol% based on the total amount of Ni, Co, and Al in the metal composite oxide, and lithium hydroxide monohydrate $(LiOH \cdot H_2O)$ was further mixed so that the molar ratio of the total amount of Ni, Co, Al, and Sr and the amount of Li was 1 : 1.02. The mixture was fired under an oxygen stream having an oxygen concentration of 95% (flow rate of 10 L/min with respect to 1 kg of the mixture) at a temperature rise rate of 2°C/min from room temperature to 650°C, and then fired at a temperature rise rate of 1°C/min from 650°C to 720°C. The fired product was washed with water to remove impurities, and thus a positive electrode active material was obtained that included a lithium-transition metal composite oxide including a primary particle having a surface on which a surface modification layer including Sr was formed. The composition of the positive electrode active material in Example 1 was analyzed with ICP-AES, and the result was $Li_{0.99}Ni_{0.899}Co_{0.05}Al_{0.05}Sr_{0.001}O_2$.

The positive electrode active material, carbon black as a conductive agent, and PVDF as a binder were mixed at a mass ratio of 91 : 7 : 2 in NMP to prepare a positive electrode mixture slurry. Next, the positive electrode mixture slurry was applied to a positive electrode current collector made of a Ti foil, and the applied film was dried and then rolled with a roller. The resulting product was cut into a predetermined electrode size to obtain a positive electrode. The amount of the applied positive electrode mixture slurry was 35.0 $gm^{-2}$, and the packing density of the positive electrode mixture layer was 2.8 $gcm^{-3}$.

[Non-Aqueous Liquid Electrolyte]

In a mixed solution obtained by mixing ethylene carbonate (EC) and dimethyl carbonate (DMC) at a volume ratio of 20 : 80, 1 M LiTFSI was dissolved to prepare a non-aqueous liquid electrolyte.

[Aqueous Liquid Electrolyte]

LiTFSI, LiBETI, and water were mixed at a molar ratio of 0.7 : 0.3 : 2.0 to prepare an aqueous liquid electrolyte in which the LiTFSI and the LiBETI were dissolved in the water.

[Separator]

In a mixed solution obtained by mixing fluoroethylene carbonate (FEC) and methyl 3,3,3-trifluoropropionate (FMP) at a volume ratio of 9 : 1, 1 M LiTFSI was dissolved to prepare an electrolyte liquid. Next, with respect to the electrolyte liquid, 4 mass% of polymethyl methacrylate (PMMA) and 8 mass% of polyvinylidene fluoride-hexafluoropropylene (PVDF-HFP) were prepared and dissolved in a solvent obtained by mixing tetrahydrofuran (THF) in an amount 10 times that of PMMA and acetone in an amount 10 times that of PMMA. The electrolyte liquid was mixed with the resulting solution to prepare a precursor solution of a non-aqueous solid electrolyte. Then, a porous sheet was immersed in the precursor solution of a non-aqueous solid electrolyte, and then dried at 60°C for 1 hour to make the precursor

EP 4 224 594 A1

solution coating the porous sheet into a water-repellent non-aqueous solid electrolyte. The resulting porous sheet coated with the non-aqueous solid electrolyte was used as a separator.

[Test Cell]

The negative electrode to which a negative electrode lead was attached was immersed in the non-aqueous liquid electrolyte to obtain the negative electrode impregnated with the non-aqueous liquid electrolyte. The positive electrode to which a positive electrode lead was attached was immersed in the aqueous liquid electrolyte to obtain the positive electrode impregnated with the aqueous liquid electrolyte. An electrode assembly in which the separator was disposed between the negative electrode and the positive electrode was housed in a battery case as shown in FIG. 1 to prepare a test cell.

<Example 2>

A test cell was prepared in the same manner as in Example 1 except that calcium hydroxide (Ca(OH)$_2$) was used instead of strontium hydroxide (Sr(OH)$_2$) in preparation of the positive electrode active material.

<Comparative Example 1>

A test cell was prepared in the same manner as in Example 1 except that no strontium hydroxide (Sr(OH)$_2$) was used in preparation of the positive electrode active material.
The test cell of each of Examples and Comparative Example 1 was charged at a constant current of 0.2 C to 4.2 V, discharged at a constant voltage of 4.2 V to 0.02 C, and rested for 20 minutes. Then, the test cell was discharged at a constant current of 0.2 C to 2.9 V and rested for 20 minutes. This charge-discharge cycle was repeated 40 times, and the capacity maintenance rate was determined with the following formula. Table 1 shows the results. A higher capacity maintenance rate value indicates larger suppression of deterioration of capacity reduction associated with the charge-discharge cycles.

$$\text{Capacity maintenance rate (\%)} = (\text{discharge capacity at 40th cycle} \div \text{discharge capacity at 1st cycle}) \times 100$$

[Table 1]

|  | Element in surface modification layer | Capacity maintenance rate (%) |
|---|---|---|
| Example 1 | Sr | 38.4 |
| Example 2 | Ca | 42.3 |
| Comparative Example 1 | - | 35.2 |

In Examples 1 and 2, the value of the capacity maintenance rate was higher than in Comparative Example. As a result, it can be said that in the lithium ion secondary battery using the aqueous electrolyte, suppression of capacity reduction associated with a charge-discharge cycle was made possible by using the positive electrode active material including the lithium-transition metal composite oxide including a primary particle having a surface on which the surface modification layer including Ca or Sr was formed.

<Example 3>

A test cell was prepared in the same manner as in Example 2 except that instead of immersing the positive electrode in the aqueous liquid electrolyte, the surface of the positive electrode was coated with an aqueous electrolyte precursor solution obtained by mixing 10 mass% of polyvinyl alcohol (PVA) with respect to the aqueous liquid electrolyte, and dried at 25°C for 12 hours.

<Comparative Example 2>

A test cell was prepared in the same manner as in Example 3 except that no calcium hydroxide (Ca(OH)$_2$) was used in preparation of the positive electrode active material.

[Table 2]

|  | Element in surface modification layer | Capacity maintenance rate (%) |
|---|---|---|
| Example 3 | Ca | 48.4 |
| Comparative Example 2 | - | 41.2 |

In Example 3, the value of the capacity maintenance rate was higher than in Comparative Example 2. As a result, it can be said that even in the case of using the electrolyte including a matrix polymer, in the lithium ion secondary battery using the aqueous electrolyte, suppression of capacity reduction associated with a charge-discharge cycle was made possible by using the positive electrode active material including the lithium-transition metal composite oxide including a primary particle having a surface on which the surface modification layer was formed.

REFERENCE SIGNS LIST

1     Lithium ion secondary battery
10    Positive electrode
12    Negative electrode
14    Separator
16    Aqueous electrolyte
18    Non-aqueous electrolyte
20    Positive electrode lead
22    Negative electrode lead
24    Battery case
26    Positive electrode current collector
28    Positive electrode mixture layer
30    Negative electrode current collector
32    Negative electrode mixture layer
34    Positive electrode active material
36    Negative electrode active material

**Claims**

**1.** A lithium ion secondary battery comprising:

a negative electrode;
a positive electrode;
a non-aqueous electrolyte including a lithium salt; and
an aqueous electrolyte including a lithium salt,
the aqueous electrolyte being in contact with only the positive electrode between the negative electrode and the positive electrode,
the non-aqueous electrolyte being in contact with at least the negative electrode between the negative electrode and the positive electrode,
the positive electrode including a positive electrode active material,
the positive electrode active material including a lithium-transition metal composite oxide and a surface modification layer formed on a surface of a primary particle of the lithium-transition metal composite oxide, the surface modification layer including at least one element selected from the group consisting of alkaline earth metal elements, rare earth elements, and Group IIIb elements, Group IVb elements, and Group Vb elements in a periodic table.

2. The lithium ion secondary battery according to claim 1, wherein the surface modification layer includes a transition metal.

3. The lithium ion secondary battery according to claim 1 or 2, wherein the surface modification layer includes at least one element of Sr or Ca.

4. The lithium ion secondary battery according to any one of claims 1 to 3, wherein

   the negative electrode includes a negative electrode active material, and
   the negative electrode active material includes at least one of a carbon material, a Li-containing alloy, or a metal oxide.

5. The lithium ion secondary battery according to any one of claims 1 to 4, wherein the aqueous electrolyte and the non-aqueous electrolyte are liquids.

6. The lithium ion secondary battery according to any one of claims 1 to 5, wherein the lithium salt in the aqueous electrolyte includes a lithium ion and an imide anion, and a concentration of the lithium salt in the aqueous electrolyte is 4.5 mol/L to 6 mol/L.

7. The lithium ion secondary battery according to any one of claims 1 to 6, wherein a porous separator coated with a water-repellent non-aqueous solid electrolyte is disposed between the positive electrode and the negative electrode.

Figure 1

## INTERNATIONAL SEARCH REPORT

International application No.

**PCT/JP2021/030129**

### A. CLASSIFICATION OF SUBJECT MATTER

*H01M 10/36*(2010.01)i; *H01M 4/36*(2006.01)i; *H01M 4/40*(2006.01)i; *H01M 4/48*(2010.01)i; *H01M 4/505*(2010.01)i; *H01M 4/525*(2010.01)i; *H01M 4/587*(2010.01)i; *H01M 10/0565*(2010.01)i; *H01M 50/489*(2021.01)i
FI:   H01M10/36 A; H01M4/505; H01M4/525; H01M4/36 C; H01M4/587; H01M4/40; H01M4/48; H01M50/489; H01M10/0565

According to International Patent Classification (IPC) or to both national classification and IPC

### B. FIELDS SEARCHED

Minimum documentation searched (classification system followed by classification symbols)

H01M10/36; H01M4/36; H01M4/40; H01M4/48; H01M4/505; H01M4/525; H01M4/587; H01M10/0565; H01M50/489

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-149875 A (TOSHIBA CORP.) 17 September 2020 (2020-09-17) | 1-7 |
| A | WO 2011/089710 A1 (TOYOTA JIDOSHA KK) 28 July 2011 (2011-07-28) | 1-7 |
| A | JP 2019-160734 A (TOSHIBA CORP.) 19 September 2019 (2019-09-19) | 1-7 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 September 2021** | **05 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2021/030129**

| Patent document cited in search report | | | Publication date (day/month/year) | Patent family member(s) | | | Publication date (day/month/year) |
|---|---|---|---|---|---|---|---|
| JP | 2020-149875 | A | 17 September 2020 | (Family: none) | | | |
| WO | 2011/089710 | A1 | 28 July 2011 | US | 2012/0276457 | A1 | |
| | | | | EP | 2518795 | A1 | |
| | | | | KR | 10-2011-0100185 | A | |
| | | | | CN | 102292849 | A | |
| | | | | AU | 2010271483 | A | |
| JP | 2019-160734 | A | 19 September 2019 | US | 2019/0288327 | A1 | |
| | | | | EP | 3540848 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6423453 B

- JP 2018198131 A